(19) Europäisches Patentamt
European Patent Office
Office européen des brevets

(11) **EP 4 773 234 A1**

(12) **EUROPEAN PATENT APPLICATION**
published in accordance with Art. 153(4) EPC

(43) Date of publication:
**08.07.2026 Bulletin 2026/28**

(21) Application number: **25855087.0**

(22) Date of filing: **14.08.2025**

(51) International Patent Classification (IPC):
*H01M 4/36* (2006.01)   *H01M 4/587* (2010.01)
*H01M 4/38* (2006.01)   *H01M 4/62* (2006.01)
*H01M 4/133* (2010.01)   *H01M 4/134* (2010.01)
*H01M 10/052* (2010.01)   *H01M 50/204* (2021.01)
*H01M 4/02* (2006.01)

(52) Cooperative Patent Classification (CPC):
H01M 4/02; H01M 4/133; H01M 4/134; H01M 4/36;
H01M 4/38; H01M 4/587; H01M 4/62;
H01M 10/052; H01M 10/0525; H01M 50/204;
Y02E 60/10

(86) International application number:
**PCT/KR2025/095478**

(87) International publication number:
**WO 2026/038938 (19.02.2026 Gazette 2026/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.08.2024 KR 20240109007**

(71) Applicant: **LG Energy Solution, Ltd.**
**Seoul 07335 (KR)**

(72) Inventors:
• **KIM, Taeho**
**Daejeon 34122 (KR)**

• **PARK, Heeyeon**
**Daejeon 34122 (KR)**
• **LEE, Seunggwan**
**Daejeon 34122 (KR)**
• **SHIN, Sun Young**
**Daejeon 34122 (KR)**
• **LEE, Yong Ju**
**Daejeon 34122 (KR)**

(74) Representative: **Hoffmann Eitle**
**Patent- und Rechtsanwälte PartmbB**
**Arabellastraße 30**
**81925 München (DE)**

(54) **SILICON CARBON COMPOSITE, ANODE ACTIVE MATERIAL, ANODE, AND SECONDARY BATTERY**

(57)   The present invention relates to a silicon carbon composite, an anode active material comprising same, an anode composition, an anode, a lithium secondary battery, a battery module, and a battery pack, wherein, in a $Si^{2p}$ spectrum obtained by XPS analysis, a ratio of the intensity of $Si^x (0<x\leq4)$ present at 100.5-105 eV to the intensity of a Si0 peak present at 99-100.5 eV is 0.1 to 0.9.

[Figure 1]

EP 4 773 234 A1

**Description**

## TECHNICAL FIELD

This application claims priority to and the benefit of Korean Patent Application No. 10-2024-0109007 filed in the Korean Intellectual Property Office on August 14, 2024, the entire contents of which are incorporated herein by reference.

The present application relates to a silicon carbon composite, a negative electrode active material including the same, a negative electrode including the negative electrode active material, and a secondary battery including the negative electrode.

## BACKGROUND ART

Recently, with the rapid spread of electronic devices using batteries, such as not only mobile phones, notebook-sized computers, and electric vehicles, but also power tools and cleaners, the demand for small and lightweight secondary batteries having relatively high capacity and/or high output is rapidly increasing. In particular, lithium secondary batteries are lightweight and have high energy density, and thus have attracted attention as driving power sources for electronic devices. Accordingly, research and development efforts to improve the performance of lithium secondary batteries have been actively conducted.

In general, a lithium secondary battery includes a positive electrode, a negative electrode, a separator interposed between the positive electrode and the negative electrode, an electrolyte, an organic solvent and the like. Further, for the positive electrode and the negative electrode, an active material layer including each of a positive electrode active material and a negative electrode active material may be formed on a current collector. In general, lithium-containing metal oxides such as $LiCoO_2$ and $LiMn_2O_4$ have been used as the positive electrode active material for the positive electrode, and lithium-free carbon-based active materials and silicon-based active materials have been used as the negative electrode active material for the negative electrode.

Batteries using graphite among negative electrode active materials may exhibit a high discharge voltage of 3.6 V, but have a limitation in increasing the energy density due to their low capacities.

In contrast, silicon-based active materials have attracted attention as next-generation negative electrode active materials due to their high capacity and efficiency. Therefore, there is a need for developing a silicon-based active material having high capacity or efficiency characteristics.

## SUMMARY OF THE INVENTION

Technical problem to be solved

The present invention has been made in an effort to provide a silicon carbon composite which can be used as a negative electrode active material having excellent capacity and/or efficiency characteristics and high energy density, a negative electrode active material, a negative electrode, and a lithium secondary battery.

Technical means for solving the technical problem

An exemplary embodiment of the present invention provides a silicon carbon composite having an intensity ratio of a $Si^x$ ($0<x\leq4$) peak present at 100.5 eV to 105 eV to a $Si^0$ peak present at 99 eV to 100.5 eV of 0.1 to 0.9 in a $Si^{2p}$ spectrum obtained by an XPS analysis of the present invention.

Another exemplary embodiment provides a negative electrode active material including the silicon carbon composite according to the above-described exemplary embodiments.

Yet another exemplary embodiment provides a negative electrode composition including the negative electrode active material according to the above-described exemplary embodiment.

Still another exemplary embodiment provides a negative electrode including the negative electrode composition according to the above-described exemplary embodiment.

Still yet another exemplary embodiment provides a lithium secondary battery including the negative electrode according to the above-described exemplary embodiment, a positive electrode, and a separator.

A further exemplary embodiment provides a battery module including the lithium secondary battery according to the above-described exemplary embodiment.

Another further exemplary embodiment provides a battery pack including the lithium secondary battery according to the above-described exemplary embodiment.

Still another further exemplary embodiment provides a battery pack including the battery module according to the above-described exemplary embodiment.

Technical Effect

According to exemplary embodiments of the present invention, it is possible to provide a lithium secondary battery having improved capacity and/or efficiency using, as a negative electrode active material, a silicon carbon composite in which peaks present within a specific range have a specific ratio during an XPS analysis. In addition, a process compatibility problem and gas generation problem of an aqueous binder occurring in the case of silicon-based active materials can be ameliorated by satisfying the above range.

## BRIEF DESCRIPTION OF THE DRAWINGS

FIG. 1 illustrates $Si^{2p}$ spectra appearing when the silicon carbon composite of Example 1 is analyzed by XPS, and graph showing the spectra separated by Gaussian fitting.

FIG. 2 illustrates $Si^{2p}$ spectra appearing when the silicon carbon composite of Example 2 is analyzed by XPS, and graph showing the spectra separated by Gaussian fitting.

FIG. 3 illustrates $Si^{2p}$ spectra appearing when the silicon carbon composite of Example 3 is analyzed by XPS, and graph showing the spectra separated by Gaussian fitting.

FIG. 4 illustrates $Si^{2p}$ spectra appearing when the silicon carbon composite of Example 4 is analyzed by XPS, and graph showing the spectra separated by Gaussian fitting.

FIG. 5 illustrates $Si^{2p}$ spectra appearing when the silicon carbon composite of Comparative Example 1 is analyzed by XPS, and graph showing the spectra separated by Gaussian fitting.

FIG. 6 illustrates $Si^{2p}$ spectra appearing when the silicon carbon composite of Comparative Example 2 is analyzed by XPS, and graph showing the spectra separated by Gaussian fitting.

FIG. 7 illustrates $Si^{2p}$ spectra appearing when the silicon carbon composite of Comparative Example 3 is analyzed by XPS, and graph showing the spectra separated by Gaussian fitting.

FIG. 8 illustrates $Si^{2p}$ spectra appearing when the silicon carbon composite of Comparative Example 4 is analyzed by XPS, and graph showing the spectra separated by Gaussian fitting.

FIG. 9 illustrates $Si^{2p}$ spectra appearing when the silicon carbon composite of Comparative Example 5 is analyzed by XPS, and graph showing the spectra separated by Gaussian fitting.

FIG. 10 illustrates $Si^{2p}$ spectra appearing when the silicon carbon composite of Comparative Example 6 is analyzed by XPS, and graph showing the spectra separated by Gaussian fitting.

FIG. 11 illustrates $Si^{2p}$ spectra appearing when the silicon carbon composite of Comparative Example 7 is analyzed by XPS.

## DETAILED DESCRIPTION

Hereinafter, the present invention will be described in more detail in order to help the understanding of the present invention. The present invention can be implemented in various different forms, and is not limited to the exemplary embodiments described herein.

In the present invention, the term "comprise", "include", or "have" is intended to indicate the presence of the characteristic, number, step, constituent element, or any combination thereof implemented, and should be understood to mean that the possibility of the presence or addition of one or more other characteristics or numbers, steps, constituent elements, or any combination thereof is not precluded.

Further, a case where a part such as a layer is present "above" or "on" another part includes not only a case where the part is present "immediately above" another part, but also a case where still another part is present therebetween. Conversely, the case where a part is present "immediately above" another part means that no other part is present therebetween. In addition, a case of being "above" or "on" a reference part means being located above or below the reference part, and does not necessarily mean being located "above" or "on" in the opposite direction of gravity.

Terms or words used in the specification should not be interpreted as being limited to typical or dictionary meaning and should be interpreted with a meaning and a concept which conform to the technical spirit of the present invention based on the principle that an inventor can appropriately define a concept of a term in order to describe his/her own invention in the best way.

Singular expressions of the terms used in the present specification include plural expressions unless they have definitely opposite meanings in the context.

Hereinafter, preferred exemplary embodiments of the present invention will be described in detail. However, the exemplary embodiments of the present invention may be modified into various other forms, and the scope of the present invention is not limited to the exemplary embodiments which will be described below.

In the present specification, X-ray photoelectron spectroscopy (XPS) is a technique for analyzing the surface chemical composition of a material, and measures the binding energy of photoelectrons emitted from surface atoms by irradiating the sample surface with high-energy X-rays. Through this, elements can be qualitatively and quantitatively analyzed, and the chemical state and environment of each element can be understood.

In the present specification, a $Si^{2p}$ spectrum obtained by an XPS analysis detects photoelectrons emitted from the 2p orbital of a silicon atom, and the oxidation state of silicon present on the surface of a negative electrode active material may be confirmed through this.

In the present specification, the XPS analysis is performed under the following conditions.

<XPS analysis conditions>

- X-ray source: Monochromated Al K $\alpha$ (1486.6 eV)
- X-ray spot size: 400 $\mu$m
- Sputtering gun: Monatomic Ar (energy: 1000 eV, current: low, raster width: 2 mm)
- Etching rate: 0.09 nm/s for Ta2O5
- Operation Mode: Constant analyzer energy (CAE) mode
- Survey scan: pass energy 200 eV, energy step 1 eV
- Narrow scan: scanned mode, pass energy 50 eV, energy step 0.1 eV
- Charge compensation: 0.1 V 150 $\mu$A
- SF: Al THERMO1
- ECF: TPP-2M
- BG subtraction: Smart

In an exemplary embodiment of the present invention, the depth profile of the X-ray photoelectron spectroscopy (XPS) may be measured by performing the spectroscopy under the X-ray source of the monochromated Al K $\alpha$ at 0.09 nm/s for up to 3000 seconds.

In the present specification, the peak intensity means a value obtained by deconvoluting a $Si^{2p}$ spectrum obtained by an XPS analysis for each peak, fitting the spectrum to a Gaussian/Lorentzian model, and then integrating an area under an obtained Gaussian function graph.

In the present specification, the peaks may be superimposed to appear as a shoulder peak, and two or more peaks may coexist.

In the present specification, when peaks are superimposed or coexist, the intensity of the corresponding peak is calculated as the sum of the intensities of two or more peaks when the intensity is calculated.

The silicon carbon composite according to an exemplary embodiment of the present invention is characterized by having an intensity ratio of a $Si^x$ ($0<x\leq4$) peak present at 100.5 eV to 105 eV to a $Si^0$ peak present at 99 eV to 100.5 eV of 0.1 to 0.9 in a $Si^{2p}$ spectrum obtained by an XPS analysis.

The silicon carbon composite according to an exemplary embodiment of the present invention may have a $Si^0$ peak present between 99 eV and 100 eV.

In the silicon carbon composite according to an exemplary embodiment of the present invention, the ratio of the intensities of the peaks may be 0.1 or more, 0.15 or more, 0.19 or more, and may be 0.9 or less, 0.7 or less, 0.6 or less.

In the specification, 0 or x in $Si^0$ and $Si^x$ ($0<x\leq4$) means the oxidation state of Si. $Si^0$ means a state in which pure silicon is bonded to itself, and is in a state in which a Si atom is not bonded to another atom. In $Si^x$ ($0<x\leq4$), x represents a state in which a silicon atom is bonded to another atom, such as O, and for example, in $SiO_2$, $Si^x$ may be represented by $Si^4$, because one silicon atom is bonded to four oxygen atoms in the crystal structure.

When the ratio is less than the above range, the ratio of pure Si on the surface of the silicon carbon composite is so high that a decrease in service life and capacity may be caused by a large volume change during charging and discharging, and the aqueous processability may deteriorate due to an increase in possibility of side reactions with the aqueous binder. In contrast, when the ratio exceeds the above range, the amount of Si phases combined with oxygen on the surface of the negative electrode active material increases, so that a large amount of irreversible phases may be produced during lithium intercalation, thereby exhibiting low charge/discharge efficiency.

According to an exemplary embodiment, the silicon carbon composite is a composite of Si and C, in which Si and C (for example, graphite) are each present. In the present specification, the silicon carbon composite may be represented by Si/C. The silicon carbon composite may be composed of Si and C that are not bonded to each other, but may also include additional components, if necessary. For example, the silicon carbon composite may or may not include silicon carbide represented by SiC. When the silicon carbon composite includes silicon carbide, the content thereof is 3 wt% or less. The silicon carbon composite may be present in a state of crystalline, amorphous, or a mixture thereof. According to an example, C in the silicon carbon composite may be present in an amorphous state.

According to an exemplary embodiment, the silicon carbon composite may be a particle having porous carbon-based particles and silicon provided in at least a portion of the interior and surface of the porous carbon-based particles; or a particle having porous silicon-based particles and carbon provided in at least a portion of the interior and surface of the porous silicon-based particles.

According to an exemplary embodiment, the silicon carbon composite is a particle having porous carbon particles and silicon provided on at least a portion of the interior and surface of the porous carbon particles. The silicon may be formed by depositing silicon on the porous carbon particles using silane gas. If necessary, a carbon layer may be further formed on the surface of the silicon carbon composite. By the carbon layer, the conductivity is imparted, and the initial efficiency, service life characteristics, and battery capacity characteristics of the secondary battery may be improved. The total weight of the carbon layer may be 2 wt% to 10 wt% based on total 100 wt% of the silicon carbon composite particles. The carbon layer may include at least any one of amorphous carbon and crystalline carbon.

According to an exemplary embodiment, the silicon carbon composite may be a particle having porous silicon particles and carbon provided on at least a portion of the interior and surface of the porous silicon particles. This may be formed by etching silicon oxide to form silicon-based particles having a porous structure, such as a Si matrix, and then coating the Si matrix with carbon. The description on the above-described carbon layer may be applied to the carbon.

In an exemplary embodiment of the present specification, in order to satisfy the above peak ratio in a silicon carbon composite by a method of depositing silicon on porous carbon, at least one of the following two methods may be performed: a method of oxidizing the surface after silicon deposition; and a method of adjusting the particle size by classifying it such that $D_{50}$ is 5 to 15 $\mu$m.

For example, after a carbon-based powder is placed in a tubular furnace and nitrogen gas is flowed to create an inert atmosphere, it is possible to perform a step of gradually increasing the temperature to heat the powder at a temperature of 300°C to 500°C, and then gradually increasing the temperature again to heat the power at a temperature of 800°C to 1000°C.

Thereafter, the powder obtained by heating is mixed with an acid solvent and then centrifuged to obtain a precipitate, and the obtained powder may be neutralized with a basic solvent and then dried to obtain a porous carbon structure. In this case, the temperature at which the carbon-based particles are put into the basic solvent and heated may be 700°C to 900°C.

A silicon carbon composite may be obtained by putting the porous carbon structure into a horizontal furnace and flowing SiH$_4$/He gas at 600 to 800°C.

It is possible to further include a step of forming an oxidation layer by putting the silicon carbon composite obtained through the above process into a furnace and flowing oxygen gas at 300°C to 500°C.

It is possible to further include a step of forming a carbon layer by putting the silicon carbon composite obtained through the above process into a furnace, heat-treating the silicon carbon composite, and then flowing a hydrocarbon gas at 600°C to 800°C.

In an exemplary embodiment of the present specification, in the case of a method of compositing carbon with porous silicon, in order to satisfy the above peak ratio, the method may be performed by at least one of a method of lowering the heat treatment temperature for the disproportionation reaction and a method of lowering the temperature during the acid treatment.

For example, after a silicon-based powder is placed in a horizontal tube and argon gas is flowed to create an inert atmosphere, the temperature may be gradually increased to induce a disproportionation reaction. In this case, the heat treatment temperature may be 500°C to 1100°C, specifically, 650°C to 950°C.

Then, after the heat-treated SiO$_x$ is taken out of the tube, and then introduced into an HF solvent at 20°C to 60°C, it is possible to perform a step of removing the SiO$_2$ phase by performing an acid treatment while lowering the temperature to 0°C to 10°C using a circulator, and then stirring the mixture.

After the obtained porous silicon is dried, a carbon layer may be formed by performing chemical vapor deposition (CVD) of a hydrocarbon gas at 550°C to 850°C. The hydrocarbon gas may be at least one hydrocarbon gas selected from the group including methane, ethane, propane, and acetylene.

When the deposition/coating temperature is lower than the above range, silicon carbide is not formed, so that the processability of the aqueous slurry is poor.

According to an exemplary embodiment, the silicon carbon composite may have a specific surface area of 0.5 to 10 $m^2/g$ by the BET method, a pore volume of 0.005 to 0.03 $cm^3/g$, and a pore size of 1 to 20 nm by the BET method. The silicon carbon composite may have a pore volume of 0.005 to 0.03 $cm^3/g$ as measured by a mercury penetration method.

According to an exemplary embodiment, the silicon carbon composite may have a $D_{90}$ particle diameter of 5 to 15 $\mu$m, a $D_{50}$ particle diameter of 1 to 10 $\mu$m, a $D_{min}$ of 1 to 3 $\mu$m, and a $D_{max}$ of 17 to 23 $\mu$m. In the present specification, an average particle diameter ($D_{50}$) may be defined as a particle diameter corresponding to 50% of a cumulative volume in a particle diameter distribution curve of the particles. The average particle diameter ($D_{50}$) may be measured using, for example, a laser diffraction method. The laser diffraction method can generally measure a particle diameter of from submicron region to about several mm, and results with high reproducibility and high resolution may be obtained.

An exemplary embodiment provides a negative electrode active material including the silicon carbon composite according to the above-described exemplary embodiments.

An exemplary embodiment provides a negative electrode composition including the negative electrode active material according to the above-described exemplary embodiment; a binder, and a conductive material.

According to an exemplary embodiment, the silicon carbon composite may be included in an amount of 0.1 parts by weight to 15 parts by weight, for example, 0.1 parts by weight to 10 parts by weight, or 1 part by weight to 10 parts by weight, based on 100 parts by weight of the negative electrode active material.

According to an exemplary embodiment, the negative electrode active material may further include a carbon-based active material. The carbon-based active material may be included in an amount of 85 parts by weight or more and 99.9 parts by weight or less, for example, 85 parts by weight to 99 parts by weight, based on total 100 parts by weight of the negative electrode active material included in the negative electrode composition. The carbon-based active material may include at least one of natural graphite and artificial graphite. When the carbon-based active material includes both natural graphite and artificial graphite, the weight ratio of the artificial graphite to the natural graphite may be 1:9 to 9:1, for example, 3:7 to 7:3. For example, based on 100 parts by weight of the carbon-based active material, the content of the natural graphite may be 10 to 70 parts by weight; and the content of the artificial graphite may be 30 to 90 parts by weight.

The natural graphite means graphite that is naturally occurring, and examples thereof include scaled graphite, scaly graphite, or soil graphite. The natural graphite has the advantages of being abundant, being low in price, having high theoretical capacity and compacted density, and being capable of implementing high output.

According to an example, spheroidized natural graphite may be used as the natural graphite, and the natural graphite may have a sphericity of 0.9 or more. According to an embodiment, the natural graphite is a spheroidized natural graphite and may have a tap density of 0.9 g/cc or more.

In the present specification, the sphericity may be a value obtained by dividing the circumference of a circle that has the same area as the projected image when a particle is projected by the perimeter length of the projected image. The sphericity may be obtained from an SEM image, or may be measured using a particle image analyzer, such as a Sysmex FPIA3000 manufactured by Malvern. Further, the crystal size can be confirmed through XRD analysis.

According to an exemplary embodiment of the present invention, the negative electrode composition further includes a binder and a conductive material, and the binder may be an aqueous binder.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a fluorocarbon powder, an aluminum powder, and a nickel powder; a conductive whisker such as zinc oxide and potassium titanate; a conductive metal oxide such as titanium oxide; a conductive material such as polyphenylene derivatives, and the like.

According to an exemplary embodiment, the aqueous binder may be included in an amount of 1 to 5 wt%, for example, about 3 to 4 wt%, based on the solid content of the negative electrode composition, and the conductive material may be included in an amount of 0.1 to 2 wt%, for example, about 1 wt%, based on the solid content of the negative electrode composition.

An exemplary embodiment of the present invention provides a negative electrode including the negative electrode composition according to the above-described exemplary embodiments.

Specifically, the negative electrode may include a negative electrode current collector and a negative electrode active material layer disposed on at least one surface of the negative electrode current collector. The negative electrode active material layer includes the negative electrode composition according to the above-described exemplary embodiment.

The negative electrode active material layer may be formed by applying a negative electrode slurry including the above-described negative electrode composition to at least one surface of a negative electrode current collector and drying and rolling the negative electrode current collector.

The negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 6 $\mu$m to 20 $\mu$m, the thickness of the current collector is not limited thereto.

The negative electrode slurry may include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

An exemplary embodiment of the present invention provides a lithium secondary battery including the negative electrode according to the above-described exemplary embodiment, a positive electrode, and a separator.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change in the battery, and for example, it is possible to use stainless steel, aluminum, nickel, titanium, fired carbon, or aluminum or stainless steel of which the surface is treated with carbon, nickel, titanium, silver, and the like. Further, the positive electrode current collector may typically have a thickness of 3 to 500 $\mu$m, and the adhesion of the positive electrode active material may also be enhanced by forming fine irregularities on the surface of the current collector. For example, the positive electrode current collector layer may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

And, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

The lithium secondary battery may further include an electrolyte. Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use may be more preferable.

As the metal salt, a lithium salt may be used, the lithium salt is a material which is easily dissolved in the non-aqueous electrolytic solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

According to still another exemplary embodiment of the present invention, provided are a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

Mode for carrying out the invention

Hereinafter, the present specification will be described in detail with reference to Examples for specifically describing the present specification. However, the Examples according to the present specification may be modified in various forms, and it is not interpreted that the scope of the present application is limited to the Examples described in detail below. The Examples of the present application are provided to explain the present specification more completely to a person with ordinary skill in the art.

**<Example 1>**

**(1) Preparation of silicon carbon composite 1**

A cellulose powder was placed in a tubular furnace, warmed to 400°C at a rate of 4°C/min, and then heated in a nitrogen atmosphere for 2 hours. Thereafter, the tubular furnace was warmed to 900°C at a rate of 4°C/min, and then heated in a nitrogen atmosphere for 2 hours. After the powder was mixed with sulfuric acid and nitric acid at a volume ratio of 3:1, the resulting mixture was stirred at 60°C for 2 hours, and then centrifuged to obtain a precipitate. The obtained powder was washed five times with a solvent in which ethanol and distilled water were mixed at a volume ratio of 1:3, and then dried at 120°C for 12 hours. The carbon-based particles were put into a KOH solvent and heated at 800°C in a nitrogen atmosphere for 2 hours to secure a porous carbon structure. The porous carbon structure was washed three times with distilled water and then dried at 120°C for 12 hours or more. The porous carbon structure was classified to have an average particle size ($D_{50}$) of 9 $\mu$m. The porous carbon structure was placed in a horizontal furnace, and $SiH_4$/He = 5/95 gas was flowed at a flow rate of 50 ml/min at 650°C for 1 hour to prepare a silicon carbon composite. The silicon carbon composite was placed in a furnace, and the silicon surface was oxidized in an oxygen atmosphere at 400°C for 30 minutes. Thereafter, the oxidation-treated silicon carbon composite was placed in a furnace, and acetylene gas was flowed at 600°C and reacted for 3 hours to prepare a silicon carbon composite negative electrode active material including a carbon layer on the outermost surface.

**(2) Manufacture of negative electrode**

An appropriate amount of distilled water was added to and mixed with a negative electrode active material including the above-prepared silicon carbon composite, natural graphite, and artificial graphite at a weight ratio of 10:15:75; a conductive material including carbon black and SWCNT; and a binder including carboxymethyl cellulose (CMC) and styrene butadiene rubber (SBR), at a weight ratio of 95.3:1:3.6, such that the total solid content was about 46% by weight, thereby preparing a negative electrode slurry.

The negative electrode slurry was applied to a Cu metal thin film having a thickness of about 20 $\mu$m, and then dried at a circulating air temperature of 60°C. Subsequently, after press-rolling, the rolled thin film was dried in a vacuum oven at 130°C for about a day, and then punched out into a circular shape of 1.4875 $cm^2$ to manufacture a negative electrode.

**(3) Manufacture of secondary battery**

A Li metal thin film punched out into 1.7671 $cm^2$ was used as a positive electrode. A porous polyethylene separator was interposed between the positive electrode and the negative electrode, and an electrolyte solution, in which 1 M $LiPF_6$ was dissolved in a mixed solvent of methyl ethyl carbonate (EMC) and EC (ethylene carbonate) at a mixing ratio of 7:3, was injected to manufacture a Li coin half-cell.

**<Example 2>**

**(1) Preparation of silicon carbon composite 2**

A silicon carbon composite was prepared in the same manner as in Example 1, except that an oxidation layer was formed on the surface of the silicon carbon composite in an oxygen atmosphere at 400°C for 1 hour.

**(2) Manufacture of negative electrode and secondary battery**

A negative electrode and a secondary battery were manufactured in the same manner as in Example 1, except that silicon carbon composite 2 was used.

**<Example 3>**

**(1) Preparation of silicon carbon composite 3**

Silicon carbon composite 3 was prepared in the same manner as in Example 1, except that the powder was classified to have an average particle diameter ($D_{50}$) of 6 $\mu$m.

**(2) Manufacture of negative electrode and secondary battery**

A negative electrode and a secondary battery were manufactured in the same manner as in Example 1, except that silicon carbon composite 3 was used.

**<Example 4>**

**(1) Preparation of silicon carbon composite 4**

After SiOx (0<x≤1) having a D$_{50}$ of 6 μm was placed in a horizontal tube, argon (Ar) gas was flowed at a rate of 1500 sccm for 1 hour to create an inert atmosphere. Then, argon gas was flowed at a rate of 150 sccm, and the temperature was increased to 1000°C at a rate of 10°C/min, and then maintained for 6 hours to induce a disproportionation reaction. After the heat-treated SiOx (0<x≤1) was taken out of the tube, the SiOx was immersed in 20 wt% of an HF aqueous solution cooled to 10°C using a circulator, and then stirred at room temperature for 1 hour to remove the SiO$_2$ phase. The resulting porous silicon was dried in a vacuum oven at 600°C for 12 hours. Thereafter, for the dried porous silicon, a mixed gas of argon/acetylene mixed at a volume ratio of 9:1 at 600°C was flowed at a rate of 100 sccm for 3 hours using a CVD apparatus to prepare a final silicon carbon composite.

**(2) Manufacture of negative electrode and secondary battery**

A negative electrode and a secondary battery were manufactured in the same manner as in Example 1, except that silicon carbon composite 4 was used.

**<Comparative Example 1>**

**(1) Preparation of silicon carbon composite 5**

Silicon carbon composite 5 was prepared in the same manner as in Example 1, except that an oxidation layer was not formed on the surface of the silicon carbon composite in an oxygen atmosphere.

**(2) Manufacture of negative electrode and secondary battery**

A negative electrode and a secondary battery were manufactured in the same manner as in Example 1, except that silicon carbon composite 5 was used.

**<Comparative Example 2>**

**(1) Preparation of silicon carbon composite 6**

Silicon carbon composite 6 was prepared in the same manner as in Example 1, except that an oxidation layer was not formed on the surface of the silicon carbon composite in an oxygen atmosphere and acetylene gas was reacted at 700°C for 3 hours.

**(2) Manufacture of negative electrode and secondary battery**

A negative electrode and a secondary battery were manufactured in the same manner as in Example 1, except that silicon carbon composite 6 was used.

**<Comparative Example 3>**

**(1) Preparation of silicon carbon composite 7**

Silicon carbon composite 7 was prepared in the same manner as in Example 1, except that an oxidation layer was formed on the surface of the silicon carbon composite in an oxygen atmosphere at 200°C for 15 minutes.

**(2) Manufacture of negative electrode and secondary battery**

A negative electrode and a secondary battery were manufactured in the same manner as in Example 1, except that silicon carbon composite 7 was used.

**<Comparative Example 4>**

**(1) Preparation of silicon carbon composite 8**

Silicon carbon composite 8 was prepared in the same manner as in Example 1, except that an oxidation layer was not formed on the surface of the silicon carbon composite in an oxygen atmosphere, acetylene gas was reacted at 700°C for 3 hours, and then the resulting product was immersed in hydrogen peroxide ($H_2O_2$) for 30 minutes.

**(2) Manufacture of negative electrode and secondary battery**

A negative electrode and a secondary battery were manufactured in the same manner as in Example 1, except that silicon carbon composite 8 was used.

**<Comparative Example 5>**

**(1) Preparation of silicon carbon composite 9**

Silicon carbon composite 9 was prepared in the same manner as in Example 4, except that the heat-treated SiOx ($0<x\leq1$) was taken out of the tube, and then immersed in 20 wt% of an HF aqueous solution, and then the resulting solution was stirred at 45°C for 1 hour to remove the $SiO_2$ phase.

**(2) Manufacture of negative electrode and secondary battery**

A negative electrode and a secondary battery were manufactured in the same manner as in Example 1, except that silicon carbon composite 9 was used.

**<Comparative Example 6>**

**(1) Preparation of silicon carbon composite 10**

Silicon carbon composite 10 was prepared in the same manner as in Example 1, except that a surface oxidation layer was formed in an oxygen atmosphere at 600°C for 1 hour.

**(2) Manufacture of negative electrode and secondary battery**

A negative electrode and a secondary battery were manufactured in the same manner as in Example 1, except that silicon carbon composite 10 was used.

**<Comparative Example 7>**

**(1) Preparation of silicon carbon composite 11**

Silicon carbon composite 11 was prepared in the same manner as in Example 1, except that an oxidation layer was formed on surface of the silicon carbon composite in an oxygen atmosphere at 400°C for 4 hours.

**(2) Manufacture of negative electrode and secondary battery**

A negative electrode and a secondary battery were manufactured in the same manner as in Example 1, except that silicon carbon composite 11 was used.

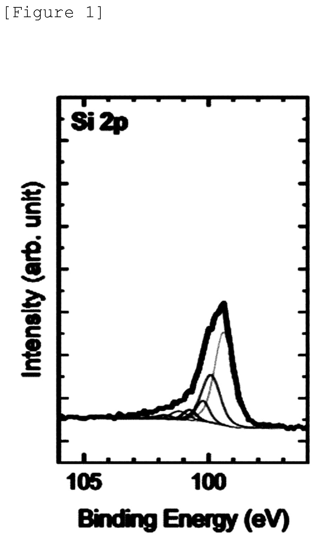

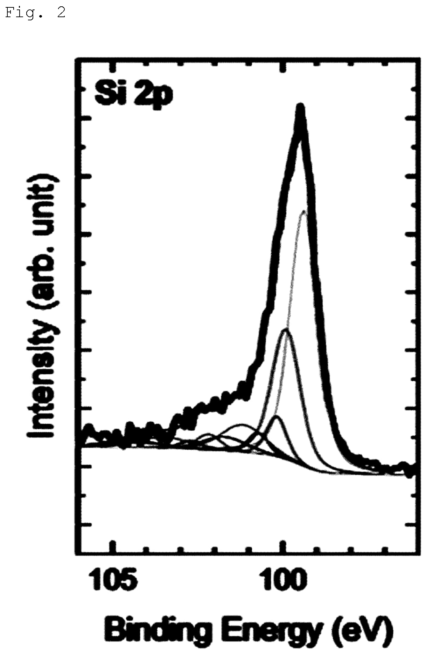

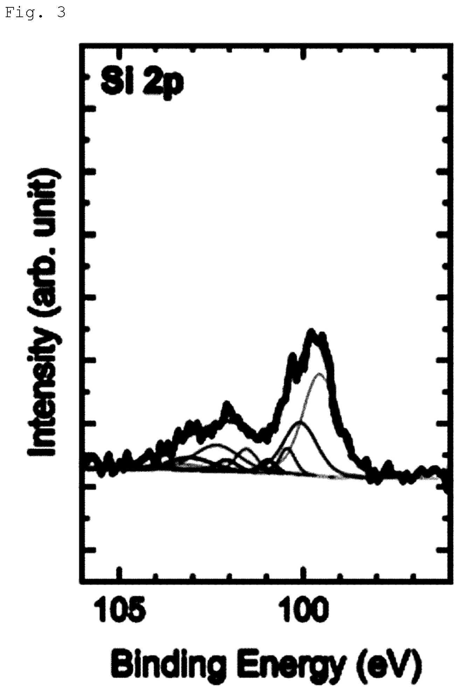

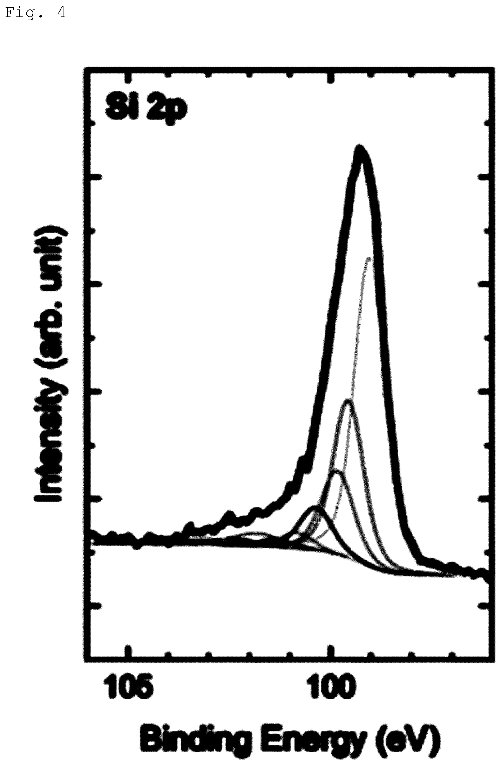

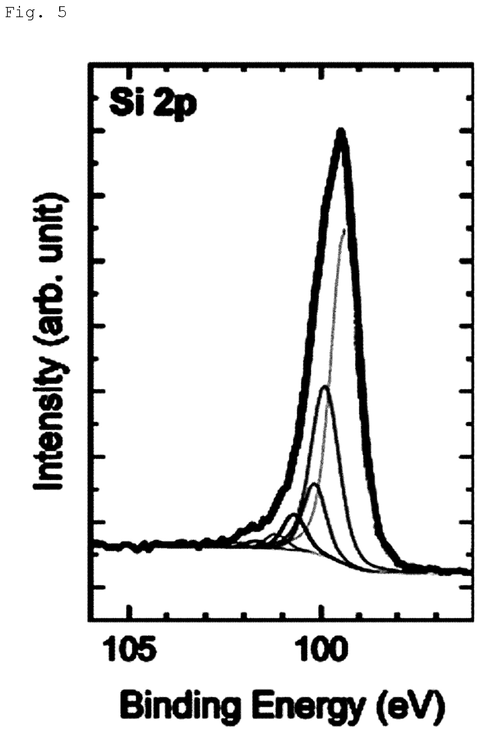

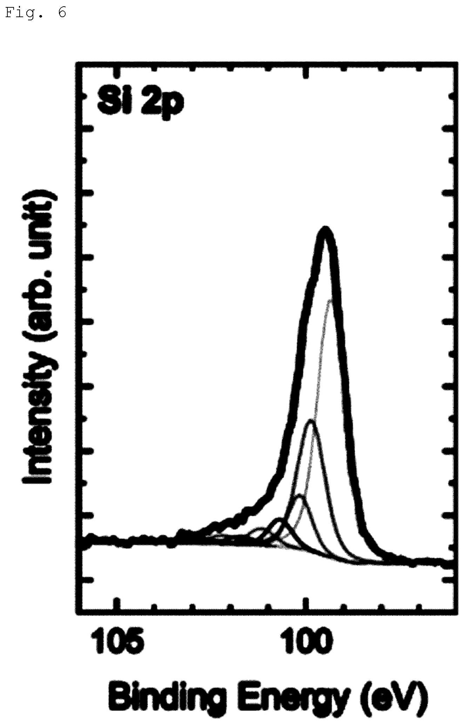

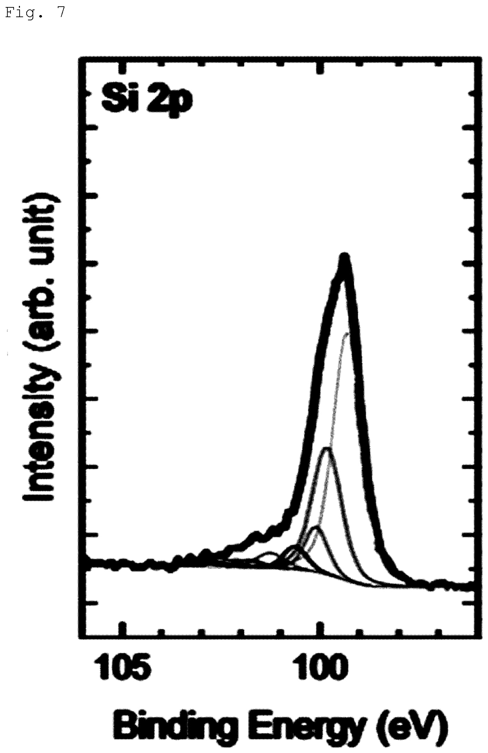

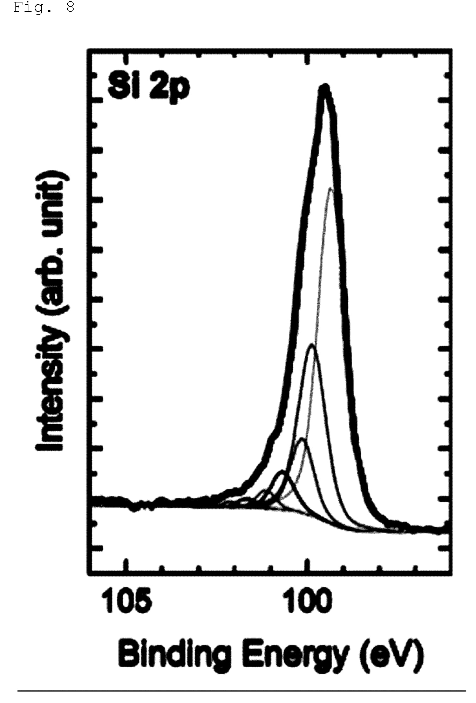

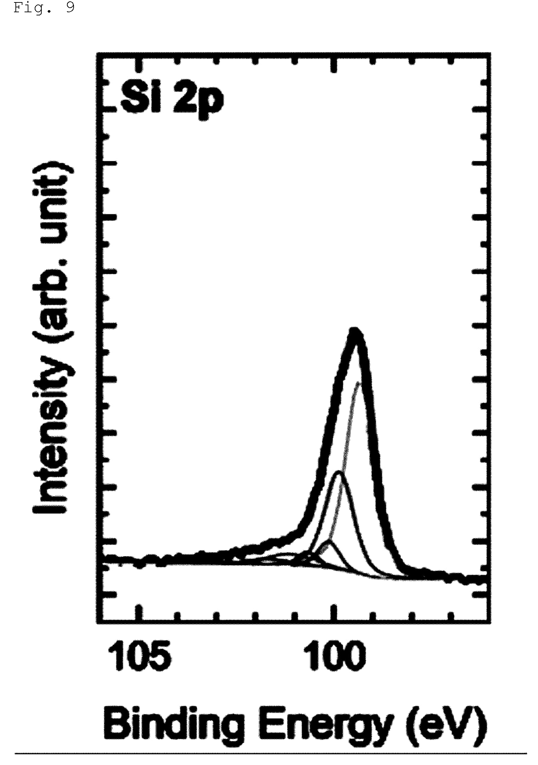

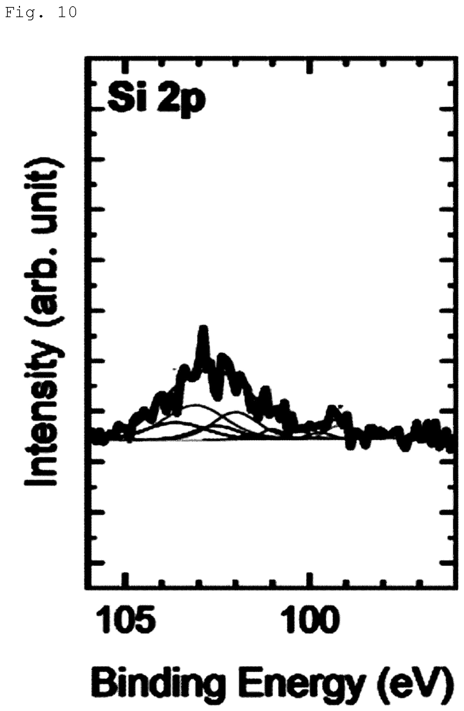

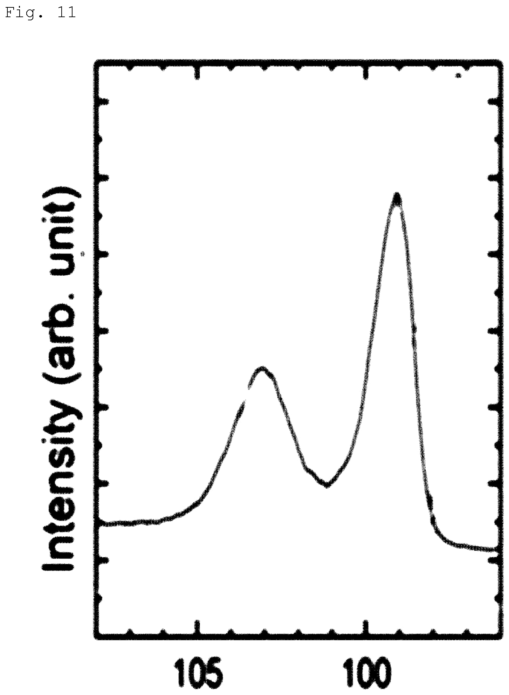

The XPS analysis results of the negative electrode active materials prepared in the Examples and Comparative Examples are shown in the following FIGs. 1 to 11 and Table 1.

Specifically, as shown in FIGs. 1 to 10, from the $Si^{2p}$ spectrum of each negative electrode active material analyzed by XPS, a waveform was analyzed by Gaussian/Lorentzian fitting, and the ratio of intensities was calculated as values obtained by integrating the areas of the $Si^0$ peak and $Si^x$ ($0<x\leq4$) peak obtained by the waveform analysis.

In FIGs. 1 to 11, those indicated by thick lines show the $Si^{2p}$ spectra before separation, and those indicated by thin lines show the spectra of each peak after waveform separation.

In this case, the $Si^0$ peak intensity in Example 1 was normalized to 1.0, and the relative values of the remaining peak intensities are shown in Table 1.

[Table 1]

| | Si$^0$ peak | | Si$^x$ (0<x≤4) peak | | Ratio of Si$^x$ (0<x≤4) peak intensity to Si$^0$ peak intensity |
|---|---|---|---|---|---|
| | Position (eV) | peak intensity | Position (eV) | peak intensity | |
| Example 1 | 99.5 | 1.0 | 101 to 102.5 | 0.11 | 0.11 |
| Example 2 | 99.8 | 1.93 | 100.5 to 103 | 0.19 | 0.10 |
| Example 3 | 99.8 | 0.89 | 101 to 103 | 0.53 | 0.60 |
| Example 4 | 99.5 | 1.88 | 101 to 103 | 0.22 | 0.12 |
| Comparative Example 1 | 99.5 | 2.11 | 101 to 102.5 | 0.05 | 0.02 |
| Comparative Example 2 | 99.5 | 1.82 | 101 to 102 | 0.05 | 0.03 |
| Comparative Example 3 | 99.4 | 1.77 | 101 to 103 | 0.08 | 0.05 |
| Comparative Example 4 | 99.6 | 2.24 | 101 to 103 | 0.08 | 0.04 |
| Comparative Example 5 | 99.1 | 1.45 | 101 to 103 | 0.07 | 0.05 |
| Comparative Example 6 | 99.2 | 1.15 | 101 to 104 | 5.9 | 5.13 |
| Comparative Example 7 | 99.0 | 1.71 | 101 to 104 | 1.55 | 0.91 |

The discharge capacity, initial efficiency, capacity retention rate, and rate of change in slurry viscosity of the Examples and Comparative Examples were measured, and are shown in the following Table 2.

**<Discharge capacity, initial efficiency, capacity retention rate>**

For the 1st and 2nd cycles, the battery was charged and discharged at 0.1 C, and from the 3rd cycle to the 299th cycle, the battery was charged and discharged at 0.5 C. The 300th cycle was completed in a charged state (with lithium contained in the negative electrode).

Charging conditions: CC (constant current)/CV (constant voltage) (5 mV/0.005 C current cut-off)
Discharging conditions: CC (constant current) conditions 1.5 V

The discharge capacity (mAh/g) and initial efficiency (%) were derived from the results during first-time charge/discharge. Specifically, the initial efficiency (%) was derived by the following calculation.

Initial efficiency (%) = (first time discharge capacity / first time charge capacity)×100

The capacity retention rate was each derived by the following calculation.

Capacity retention rate (%) = (299$^{th}$ time discharge capacity / first time discharge capacity)×100

**<Rate of change in slurry viscosity>**

To measure the rate of change in slurry viscosity, a slurry was prepared by mixing graphite: the negative electrode active material: carbon black: CMC: PAA at a weight ratio of 77:20:1:1:1. By measuring the shear viscosity of the prepared slurry at a shear rate of 1 Hz, the amounts of change over time were measured and compared.
The rate (%) of change in the shear viscosity was derived by the following equation.

Rate (%) of change in shear viscosity = ((shear viscosity of slurry after 2 days - viscosity of slurry immediately after mixing) / viscosity of slurry immediately after mixing) x 100

[Table 2]

| Battery | Discharge capacity (mAh/g) | Initial efficiency (%) | Capacity retention rate (%) | Rate of change in slurry viscosity (%, after 2 days) | Rate of change in pouch volume (%, @40°C, after 2 days) |
|---|---|---|---|---|---|
| Example 1 | 502 | 92.0 | 89.0 | -2.5 | 1 |
| Example 2 | 503 | 91.8 | 88.9 | -1.1 | 0 |
| Example 3 | 498 | 91.5 | 88.1 | -0.4 | 0 |
| Example 4 | 490 | 91.6 | 88.6 | -3.1 | 1.5 |
| Comparative Example 1 | 485 | 91.0 | 84.4 | -41.6 | 8 |
| Comparative Example 2 | 495 | 90.6 | 84.7 | -35.3 | 7 |
| Comparative Example 3 | 494 | 90.1 | 85.8 | -30.6 | 6 |
| Comparative Example 4 | 492 | 90.8 | 85.5 | -26.8 | 6 |
| Comparative Example 5 | 488 | 89.9 | 83.8 | -20.1 | 4 |
| Comparative Example 6 | 479 | 86.1 | 81.3 | -4.9 | 2.5 |
| Comparative Example 7 | 468 | 84.2 | 79.6 | -1.2 | 1 |

As shown in Table 2, it can be confirmed that Examples 1 to 4, in which the ratio of the $Si^x$ peak to the $Si^0$ peak satisfies 0.1 to 0.9 in Table 1, exhibit high capacity and efficiency, and show a small change in terms of the rate of change in slurry viscosity and the rate of change in pouch volume.

In Comparative Examples 1 to 5, experimental data was obtained when an oxidation layer was not formed or was only insufficiently formed on the surface of the silicon carbon composite, and when the data was analyzed by XPS, the ratio of the $Si^x$ peak to the $Si^0$ peak was shown to be very small. As the silicon on the surface was not oxidized to an appropriate amount, silicon in the $Si^0$ state was exposed to the surface, and thus, was instable, so that since hydrogen gas may be generated by reaction with water, it could be confirmed that large volume expansion was generated due to poor aqueous slurry processability.

In Comparative Examples 6 and 7, the ratio of the $Si^x$ peak to the $Si^0$ peak was shown to be excessively large, and a surface oxidation process was performed at high temperatures to produce an excessive amount of SiOx, resulting in a decrease in initial efficiency and low electrical conductivity.

**Claims**

1.  A silicon carbon composite having an intensity ratio of a $Si^x$ ($0 < x \leq 4$) peak present at 100.5 eV to 105 eV to a $Si^0$ peak present at 99 eV to 100.5 eV of 0.1 to 0.9 in a $Si^{2p}$ spectrum obtained by an XPS analysis.

2.  The silicon carbon composite of claim 1, wherein the $Si^0$ peak is present between 99 eV and 100 eV.

3.  The silicon carbon composite of claim 1, wherein the silicon carbon composite is a particle having porous carbon particles and silicon provided in at least a portion of the interior and surface of the porous carbon particles; or a particle having porous silicon particles and carbon provided in at least a portion of the interior and surface of the porous silicon particles.

4.  A negative electrode active material comprising the silicon carbon composite according to any one of claims 1 to 3.

5.  The negative electrode active material of claim 4, wherein the negative electrode active material further comprises a carbon-based active material.

6.  The negative electrode active material of claim 5, wherein the carbon-based active material comprises artificial graphite and natural graphite.

7.  The negative electrode active material of claim 4, wherein the silicon carbon composite is comprised in an amount of 0.1 parts by weight to 10 parts by weight based on 100 parts by weight of the negative electrode active material.

8. A negative electrode composition comprising the negative electrode active material according to claim 4; a binder, and a conductive material.

9. A negative electrode comprising the negative electrode composition according to claim 8.

10. A lithium secondary battery comprising the negative electrode according to claim 9, a positive electrode, and a separator.

11. A battery module comprising the lithium secondary battery according to claim 10.

12. A battery pack comprising the lithium secondary battery according to claim 10.

13. A battery pack comprising the battery module of claim 11.

[Figure 1]

Fig. 2

Fig. 3

Fig. 4

Fig. 5

Fig. 6

Fig. 7

Fig. 8

Fig. 9

Fig. 10

Fig. 11

**TRANSLATION**

### INTERNATIONAL SEARCH REPORT

| International application No. |
| --- |
| **PCT/KR2025/095478** |

| A. | CLASSIFICATION OF SUBJECT MATTER |
| --- | --- |

**H01M 4/36**(2006.01)i; **H01M 4/587**(2010.01)i; **H01M 4/38**(2006.01)i; **H01M 4/62**(2006.01)i; **H01M 4/133**(2010.01)i; **H01M 4/134**(2010.01)i; **H01M 10/052**(2010.01)i; **H01M 50/204**(2021.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); C01B 32/182(2017.01); H01M 10/052(2010.01); H01M 10/0525(2010.01); H01M 4/13(2010.01); H01M 4/133(2010.01); H01M 4/38(2006.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 음극 활물질(anode active material), 실리콘 카본 복합체(silicon carbon composite), 수계 바인더(aqueous binder), XPS(X-ray photoelectron spectroscopy), 탄소계 활물질(carbon-based active material)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2019-0083613 A (SAMSUNG ELECTRONICS CO., LTD. et al.) 12 July 2019 (2019-07-12)<br>abstract; claims 1, 11, 19, 21, 22; paragraphs [0150], [0173], [0379]; figure 6 | 1-13 |
| Y | KR 10-2023-0090829 A (SK ON CO., LTD.) 22 June 2023 (2023-06-22)<br>claim 1; paragraphs [0002], [0034], [0035], [0038]-[0040], [0057], [0058], [0100], [0101], [0111] | 1-13 |
| A | KR 10-2018-0010534 A (SAMSUNG SDI CO., LTD.) 31 January 2018 (2018-01-31)<br>abstract; claims 1-11 | 1-13 |
| A | KR 10-1341951 B1 (DONGGUK UNIVERSITY INDUSTRY-ACADEMIC COOPERATION FOUNDATION) 16 December 2013 (2013-12-16)<br>abstract; claims 1-3 | 1-13 |
| A | JP 2023-059283 A (RESONAC CORP.) 26 April 2023 (2023-04-26)<br>abstract; claims 1-15 | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 November 2025** | **21 November 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/095478**

| Patent document cited in search report | | | Publication date (day/month/year) | Patent family member(s) | | | Publication date (day/month/year) |
|---|---|---|---|---|---|---|---|
| KR | 10-2019-0083613 | A | 12 July 2019 | JP | 2019-119669 | A | 22 July 2019 |
| | | | | JP | 2023-130342 | A | 20 September 2023 |
| | | | | JP | 7704372 | B2 | 08 July 2025 |
| | | | | KR | 10-2617731 | B1 | 05 January 2024 |
| | | | | US | 12374694 | B2 | 29 July 2025 |
| | | | | US | 2024-0030452 | A1 | 25 January 2024 |
| | | | | US | 2024-0047688 | A1 | 08 February 2024 |
| | | | | US | 2024-0113302 | A1 | 04 April 2024 |
| KR | 10-2023-0090829 | A | 22 June 2023 | CN | 116264268 | A | 16 June 2023 |
| | | | | EP | 4199137 | A1 | 21 June 2023 |
| | | | | EP | 4199137 | B1 | 18 December 2024 |
| | | | | US | 2023-0187621 | A1 | 15 June 2023 |
| KR | 10-2018-0010534 | A | 31 January 2018 | CN | 107644983 | A | 30 January 2018 |
| | | | | CN | 107644983 | B | 15 April 2022 |
| | | | | KR | 10-2270155 | B1 | 28 June 2021 |
| | | | | US | 2018-0026257 | A1 | 25 January 2018 |
| KR | 10-1341951 | B1 | 16 December 2013 | US | 2014-0021415 | A1 | 23 January 2014 |
| | | | | US | 8986577 | B2 | 24 March 2015 |
| JP | 2023-059283 | A | 26 April 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240109007